# EUROPEAN PATENT APPLICATION

(11) **EP 4 715 601 A1**
(43) Date of publication of application: **25.03.2026**
(21) Application number: 25817406.9
(22) Date of filing: 11.09.2025
(51) Int. Cl.: G06F 11/362

(54) **DEBUGGING AND PERFORMANCE MONITORING METHOD AND SYSTEM FOR IOS APPLICATION DEVELOPMENT**

(30) Priority: 21.10.2024 CN 202411473964
(71) Applicant: Ugreen Group Limited, Shenzhen, Guangdong 518110 (CN)
(72) Inventor: LV, Xuming, Shenzhen, Guangdong 518110 (CN); LI, Yunxin, Shenzhen, Guangdong 518110 (CN)
(74) Representative: Petraz, Gilberto Luigi
(86) International application number: PCT/CN2025/120680
(87) International publication number: WO 2026/017186

(57) **Abstract**

Disclosed in the present application is a method for debugging and performance monitoring in iOS application development and a system therefor, the method being applied to a system for debugging and performance monitoring in iOS application development, the system including a multifunctional debugging module and a performance monitoring module configured to be simultaneously invoked, the method including: determining a response module and a response matter when it is determined that current operating conditions satisfy a usage control requirement for the system; the response module includes a first-level module or a second-level module; the first-level module includes the multifunctional debugging module and the performance monitoring module, the second-level module includes a debugging sub-module and a monitoring sub-module; controlling the response module to perform a matter response operation according to the response matter, obtaining a matter response result; the response matters include debugging matters and performance monitoring matters; the matter response operation includes multidimensional system parameter debugging and performance data analysis and optimization processing.

## Description

### TECHNICAL FIELD

The present application relates to the technical field of system intelligent control, and in particular, to a method for debugging and performance monitoring in iOS application development and a system therefor.

### BACKGROUND

The development of iOS applications has become an important part of the software development field with the rapid development of mobile internet technology. However, during the development process of iOS applications, debugging and performance monitoring have always been important challenges faced by developers. Although existing debugging and performance monitoring tools perform well in their respective fields, they still have the following main defects: since the existing debugging and performance monitoring tools focus on a specific debugging or monitoring task, and each tool is used independently, developers need to frequently switch between tools when multiple debugging and monitoring tasks are required, increasing development complexity and time cost. Therefore, it is particularly important to provide a corresponding solution for the technical problem of incompatibility between debugging and performance monitoring tools in existing iOS application development, leading to high development complexity.

### SUMMARY

The present application provides a method and system for debugging and performance monitoring in iOS application development, configured to achieve integration and unification of multifunctional debugging and monitoring tools, reducing user development complexity and improving development efficiency.

To solve the above technical problem, disclosed in a first aspect of the present application is a method for debugging and performance monitoring in iOS application development, the method being applied to a system for debugging and performance monitoring in iOS application development, the system integrating at least a multifunctional debugging module and a performance monitoring module, and the multifunctional debugging module and the performance monitoring module being configured to be synchronously invoked, and the method includes:
determining a response module that responds to a usage control requirement, and determining a response matter triggered by a user in the response module, after determining that current operating conditions of the system satisfy the user's usage control requirement for the system; the response module includes a first-level module or a second-level module; a module hierarchy of the first-level module is higher than a module hierarchy of the second-level module; the first-level module includes the multifunctional debugging module and the performance monitoring module; the second-level module includes at least one debugging sub-module of the multifunctional debugging module and at least one monitoring sub-module of the performance monitoring module;
controlling the response module to perform a matter response operation according to the response matter, obtaining a matter response result for the response module.

The response matters include debugging matters for the multifunctional debugging module and performance monitoring matters for the performance monitoring module; the matter response operation includes a multidimensional system parameter debugging operation corresponding to the debugging matters and performance data analysis and optimization processing corresponding to the performance monitoring matters.

Disclosed in a second aspect of the present application is a system for debugging and performance monitoring in iOS application development, the system including:
a memory, memorized with an executable code; and
a processor, coupled with the memory,
where the processor invokes the executable code memorized in the memory to perform the method for debugging and performance monitoring in iOS application development disclosed in the first aspect of the present application.

Disclosed in a third aspect of the present application is a network attached storage device, the network attached storage device including a device body, the network attached storage device being configured to execute the method for debugging and performance monitoring in iOS application development disclosed in the first aspect of the present application.

Compared to the prior art, the embodiments of the present application provide beneficial effects as follows.

In the embodiment of the present application, a method for debugging and performance monitoring in iOS application development and a system therefor are provided. By implementing the present embodiment, the multifunctional debugging module and the performance monitoring module are uniformly integrated on one system, and then real-time multi-dimensional debugging and performance monitoring functions are achieved through the control interface corresponding to the unified system, lowering the user barrier, reducing the time consumption for users to switch tools when performing different debugging and monitoring operations, and leading to improved efficiency and convenience for users using the system for development.

### BRIEF DESCRIPTION OF THE DRAWINGS

FIG. 1 is a schematic flowchart of a method for debugging and performance monitoring in iOS application development disclosed in an embodiment of the present application;
FIG. 2 is a schematic flowchart of another method for debugging and performance monitoring in iOS application development disclosed in an embodiment of the present application;
FIG. 3 is a schematic structural diagram of a system for debugging and performance monitoring in iOS application development disclosed in an embodiment of the present application.

### DETAILED DESCRIPTION

Disclosed in the present application are a method for debugging and performance monitoring in iOS application development and a system therefor, which uniformly integrate the multifunctional debugging module and the performance monitoring module on one system, and then achieve real-time multi-dimensional debugging and performance monitoring functions through the control interface corresponding to the unified system, lowering the user barrier, reducing the time consumption for users to switch tools when performing different debugging and monitoring operations, and leading to improved efficiency and convenience for users using the system for development. A detailed description is provided below respectively.

### Embodiment 1

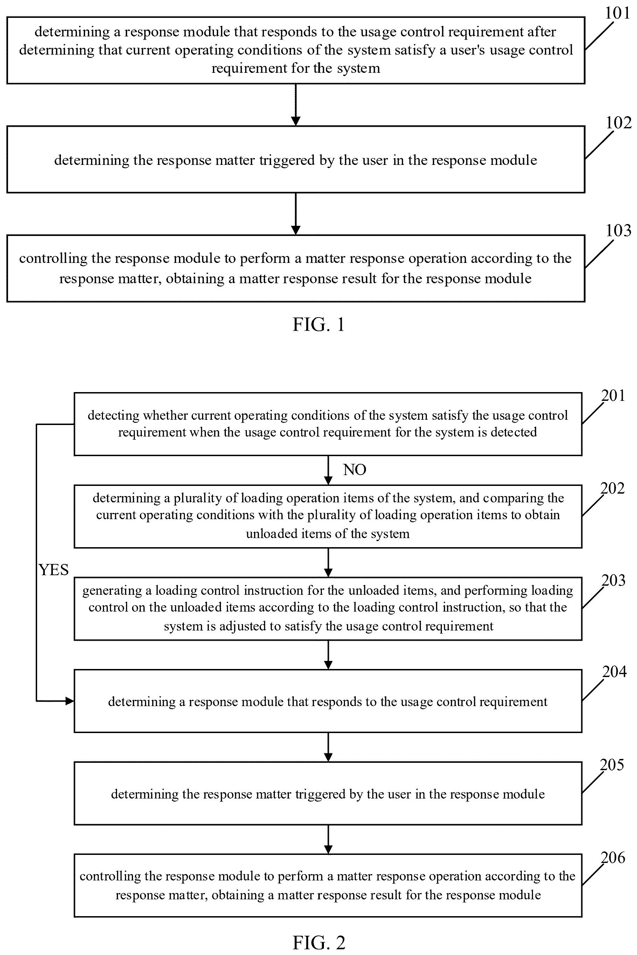

Please refer to FIG. 1. FIG. 1 is a schematic flowchart of a method for debugging and performance monitoring in iOS application development disclosed in an embodiment of the present application. The method for debugging and performance monitoring in iOS application development described in FIG. 1 may be applied to a system or device for debugging and performance monitoring in iOS application development, which is not limited in the embodiment of the present application. The system integrates at least a multifunctional debugging module and a performance monitoring module, where the multifunctional debugging module and the performance monitoring module are configured to be synchronously invoked. As shown in FIG. 1, the method for debugging and performance monitoring in iOS application development may include the following operations:
Step 101: determining a response module that responds to the usage control requirement after determining that current operating conditions of the system satisfy a user's usage control requirement for the system.

In the embodiment of the present application, the usage control requirement may be a control instruction issued by the user for the system; specifically, the control instruction may be generated after the user triggers a response module installed on the system.

In the embodiment of the present application, the response module includes a first-level module or a second-level module; a module hierarchy of the first-level module is higher than a module hierarchy of the second-level module; the first-level module includes the multifunctional debugging module and the performance monitoring module; the second-level module includes at least one debugging sub-module of the multifunctional debugging module and at least one monitoring sub-module of the performance monitoring module.

In the embodiment of the present application, it should be noted that when the response module is the first-level module, it is defaulted that the usage control requirement currently triggered by the user requires invoking all module functions of the multifunctional debugging module and the performance monitoring module; when the response module is the second-level module, it is defaulted that the usage control requirement currently triggered by the user only requires invoking one or more debugging sub-modules, and only requires invoking one or more monitoring sub-modules; and when multiple debugging sub-modules are invoked, the number of all invoked debugging sub-modules is necessarily less than the number of all debugging sub-modules; similarly, when multiple monitoring sub-modules are invoked, the number of all invoked monitoring sub-modules is necessarily less than the number of all monitoring sub-modules.

Step 102: determining the response matter triggered by the user in the response module.

Step 103: controlling the response module to perform a matter response operation according to the response matter, obtaining a matter response result for the response module.

In the embodiment of the present application, the response matters include debugging matters for the multifunctional debugging module and performance monitoring matters for the performance monitoring module; the matter response operation includes a multidimensional system parameter debugging operation corresponding to the debugging matters and performance data analysis and optimization processing corresponding to the performance monitoring matters.

Therefore, implementing the method for debugging and performance monitoring in iOS application development described in FIG. 1, which integrates the multifunctional debugging module and the performance monitoring module uniformly on one system, and then achieves real-time multi-dimensional debugging and performance monitoring functions through the control interface corresponding to the unified system, lowers the user barrier, reduces the time consumption for users to switch tools when performing different debugging and monitoring operations, leading to improved efficiency and convenience for users using the system for development.

### Embodiment 2

Please refer to FIG. 2. FIG. 2 is a schematic flowchart of another method for debugging and performance monitoring in iOS application development disclosed in an embodiment of the present application. The method for debugging and performance monitoring in iOS application development described in FIG. 2 can be applied to a device for debugging and performance monitoring in iOS application development, which is not limited in the embodiment of the present application. As shown in FIG. 2, the method for debugging and performance monitoring in iOS application development can include the following operations:
Step 201: detecting whether current operating conditions of the system satisfy the usage control requirement when the usage control requirement for the system is detected.

In the embodiment of the present application, trigger the execution of step 204 when step 201 detects that the current operating conditions of the system satisfy the usage control requirement; trigger the execution of step 202 when step 201 detects that the current operating conditions of the system do not satisfy the usage control requirement.

Step 202: determining a plurality of loading operation items of the system, and comparing the current operating conditions with the plurality of loading operation items to obtain unloaded items of the system.

Step 203: generating a loading control instruction for the unloaded items, and performing loading control on the unloaded items according to the loading control instruction, so that the system is adjusted to satisfy the usage control requirement.

In the embodiment of the present application, the plurality of loading operation items include at least one item component of a core debugging tool component, a performance monitoring plugin, a network debugging plugin, a user interaction and gesture plugin, other general debugging tools, or a third-party plugin.

In the embodiment of the present application, the core debugging tool component includes a view inspector, a measurement tool, and a color picker; the performance monitoring plugin includes a frame rate monitor, a CPU and memory usage monitor; the network debugging plugin includes a network log recorder, an API inspector; the user interaction and gesture plugin includes a touch inspector, a gesture recognition debugger; the other general debugging tools include a console log recorder and a sandbox browser.

The View Inspector is configured to inspect and debug application interface elements in real time, allowing developers to view the hierarchy, layout, and attribute information of views; the Measurement Tool allows developers to measure the dimensions, margins, and layout of views in the application, helping developers precisely adjust the position and size of interface elements; the Color Picker is configured to select and view colors used in views, and supports modifying color configurations, facilitating the adjustment of interface color schemes; the FPS Monitor is configured to monitor the application's frame rate (FPS) in real time, helping developers identify performance bottlenecks and optimize interface rendering performance; the CPU and Memory Usage Monitor is configured to monitor the application's CPU and memory usage, to help developers identify and resolve performance issues; the Network Logger is configured to record and display the application's network requests, response data, HTTP header information, etc., helping developers debug and optimize network-related functions; the API Inspector is configured to view and test API requests sent by the application and their responses, to ensure the correctness of network interactions; the Touch Inspector is configured to record and display touch and gesture operations performed by users in the application, helping developers debug user interaction issues; the Gesture Recognizer Debugger is configured to monitor and analyze the gesture recognition process, to ensure the normal operation of the application's gesture functions; the Console Logger is configured to collect and display log information during application runtime, facilitating debugging and troubleshooting; the Sandbox Browser allows developers to directly access and view the application's sandbox file system, facilitating debugging of file read and write issues.

Step 204: determining a response module that responds to the usage control requirement.

Step 205: determining the response matter triggered by the user in the response module.

Step 206: controlling the response module to perform a matter response operation according to the response matter, obtaining a matter response result for the response module.

In the present embodiment of the application, regarding other descriptions of step 204 to step 206, please refer to the other detailed descriptions in the embodiment 1 regarding step 101 to step 103, which is not repeated in the present embodiment of the application.

Therefore, implementing the method for debugging and performance monitoring in iOS application development described in FIG. 2 sets up a detection and adjustment mechanism for the system's current operating conditions, enabling the system to automatically identify and determine missing loading operation items (such as the core debugging tool component and performance monitoring plugin) and generate corresponding loading control instructions to perform loading when it is detected that the current operating conditions of the system do not satisfy the usage control requirement, thereby ensuring that the system is configured to dynamically adjust its functions and performance according to actual needs, leading to improved operational reliability of the system; at the same time, based on the multiple loading operation items set up in this way, the system is enabled to provide comprehensive and powerful debugging and monitoring functions, thereby meeting the usage requirements of different development stages and scenarios, further improving the applicability of the system.

In an optional implementation, all the debugging sub-modules include an interface control sub-module, a memory detection sub-module, a log management sub-module, and a network management sub-module;
the step of determining the response matter triggered by the user in the response module specifically includes:
determining at least one target debugging sub-module that responds to the usage control requirement from all the debugging sub-modules;
detecting a secondary control instruction triggered for the target debugging sub-module and corresponding instruction details thereof, and adding the secondary control instruction and corresponding instruction details thereof to the response matter triggered by the user in the response module;
the secondary control instruction includes at least one instruction of a view editing instruction for the interface control sub-module, a memory detection processing instruction for the memory detection sub-module, a debugging and troubleshooting instruction for the log management sub-module, and a network debugging and optimization instruction for the network management sub-module.

In this optional implementation, it should be noted that the instruction details corresponding to the secondary control instruction include at least one of interface hierarchy viewing, interface layout adjustment, and interface attribute editing when the secondary control instruction includes the view editing instruction;
the instruction details corresponding to the secondary control instruction include at least one of application memory usage data monitoring, memory leak detection, and memory leak localization and processing when the secondary control instruction includes the memory detection processing instruction;
the instruction details corresponding to the secondary control instruction include at least one of log display, layout and constraint debugging, measurement parameter debugging based on the measurement tool, color parameter debugging based on the color picker, frame rate debugging based on the frame rate monitor, memory leak detection based on the CPU and memory usage monitor, network debugging based on the network log recorder, API debugging based on the API inspector, touch debugging based on the touch inspector, gesture debugging based on the gesture recognition debugger, log debugging based on the console log recorder, sandbox debugging based on the sandbox browser, and plugin debugging based on a custom plugin when the secondary control instruction includes the debugging and troubleshooting instruction;
the instruction details corresponding to the secondary control instruction include at least one of network request sending, network request recording, and network performance debugging when the secondary control instruction includes the network debugging and optimization instruction.

Therefore, in this optional embodiment, for the case where the response module includes the multifunctional debugging module, the response module is able to use the top-level multifunctional debugging module as a basis to access and invoke secondary sub-modules (target debugging sub-modules), achieving fine management and integration of multiple secondary sub-modules through hierarchical module management, thereby facilitating management; furthermore, the multifunctional debugging module integrates multiple debugging sub-modules such as interface control, memory detection, log management, and network management, that is, by integrating multiple debugging functions in the same system, users do not need to switch between multiple independent tools or systems, and can complete various debugging tasks in a one-stop manner, greatly reducing the time cost and operational complexity in the debugging process, leading to improved efficiency and flexibility of debugging work.

In an optional implementation, the step of determining the response matter triggered by the user in the response module specifically includes:
acquiring application performance data collected for a currently running application in the system, the application performance data including at least one of CPU usage rate, memory occupancy, frame rate, and network bandwidth;
determining a plurality of optimization parameters of the performance monitoring module, and analyzing the application performance data to obtain a target optimization parameter currently to be optimized in the application performance data, the plurality of optimization parameters including at least one optimization parameter of interface rendering performance, memory usage, network request and data loading, animation performance, plugin startup time, thread processing and parallel tasks, application crash and error;
adding the target optimization parameter and the corresponding preset optimization matter thereof to the response matter triggered by the user in the response module.

Therefore, in this optional embodiment, by monitoring the application performance data of the currently running application in the system in real time (such as CPU usage rate, memory occupancy, frame rate, and network bandwidth, etc.), comprehensive mastery of the application performance is achieved; at the same time, through intelligent analysis of this data, the target optimization parameters currently to be optimized may be accurately identified, such as interface rendering performance, memory usage, network requests and data loading, leading to, on the basis of integrating multiple debugging functions, further integration of real-time monitoring and precise analysis functions for application performance data, improving the functional comprehensiveness and applicability of the system.

In yet another optional implementation, the response module further includes a plugin extension module and/or a user interface module;
the step of determining the response matter triggered by the user in the response module specifically includes:
determining a plugin to be installed for the system and the corresponding plugin installation matter thereof according to the usage control requirement, and adding the plugin to be installed and the corresponding plugin installation matter thereof to the response matter triggered by the user in the response module when the response module includes the plugin extension module;
determining a switching requirement for any debugging and monitoring tool in the system according to the usage control requirement, generating a switching response instruction matching the switching requirement, and adding the debugging and monitoring tool and the corresponding switching response instruction thereof to the response matter triggered by the user in the response module when the response module includes the user interface module;
the debugging and monitoring tool is a functional implementation tool provided in the multifunctional debugging module and the performance monitoring module.

Therefore, in this optional embodiment, the response module also introduces a plugin extension module, enabling the system to dynamically add or update functional plugins according to the usage control requirement, thereby allowing developers or users to customize and adjust the system's functions by installing or uninstalling plugins without modifying the core code of the system, which is conducive to enhancing the scalability of the system, and enabling the system to easily adapt to different application scenarios and requirement changes, and the user interface module, which is conducive to improving the flexibility of the system; as well as, the introduction of the user interface module allows users to conveniently switch debugging and monitoring tools according to their own needs, which is conducive to improving the operational convenience and user experience when using the system.

### Embodiment 3

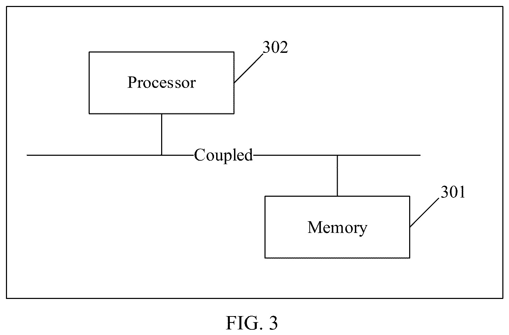

Please refer to FIG. 3. FIG. 3 is a schematic structural diagram of a system for debugging and performance monitoring in iOS application development disclosed in an embodiment of the present application. As shown in FIG. 3, the system for debugging and performance monitoring in iOS application development may include:
a memory 301, memorized with an executable code; and
a processor 302, coupled with the memory 301,
the processor 302 invokes the executable code memorized in the memory 301 to perform steps of the method for debugging and performance monitoring in iOS application development as described in embodiment 1 or embodiment 2.

### Embodiment 4

Disclosed in the present embodiment of the application is a network attached storage device, the network attached storage device including a device body, the network attached storage device being configured to execute the steps in the method for debugging and performance monitoring in iOS application development described in Embodiment 1 or Embodiment 2 of the present application.

In the embodiment of the present application, it should be noted that the method for debugging and performance monitoring in iOS application development described in Embodiment 1 or Embodiment 2 of the present application may be applied to a highly integrated app/application in actual use; further, the user is configured to perform data interaction with the network attached storage device through the app/application, and then upload data to the network attached storage device or read required interaction data from the network attached storage device.

### Embodiment 5

Disclosed in the present embodiment of the application is a computer program product, the computer program product including a non-transitory computer storage medium storing a computer program, and the computer program being operable to cause a computer to execute the steps in the method for debugging and performance monitoring in iOS application development described in Embodiment 1 or Embodiment 2.

## Claims

1. A method for debugging and performance monitoring in iOS application development, applied to a system for debugging and performance monitoring in iOS application development, the system integrating at least a multifunctional debugging module and a performance monitoring module, and the multifunctional debugging module and the performance monitoring module being configured to be synchronously invoked, wherein the method comprises:
determining a response module that responds to a usage control requirement, and determining a response matter triggered by a user in the response module, after determining that current operating conditions of the system satisfy the user's usage control requirement for the system; the response module comprises a first-level module or a second-level module; a module hierarchy of the first-level module is higher than a module hierarchy of the second-level module; the first-level module comprises the multifunctional debugging module and the performance monitoring module; the second-level module comprises at least one debugging sub-module of the multifunctional debugging module and at least one monitoring sub-module of the performance monitoring module;
controlling the response module to perform a matter response operation according to the response matter, obtaining a matter response result for the response module;
wherein the response matters comprise debugging matters for the multifunctional debugging module and performance monitoring matters for the performance monitoring module; the matter response operation comprises a multidimensional system parameter debugging operation corresponding to the debugging matters and performance data analysis and optimization processing corresponding to the performance monitoring matters.

2. The method for debugging and performance monitoring in iOS application development according to claim 1, further comprising:
detecting whether current operating conditions of the system satisfy the usage control requirement when the usage control requirement for the system is detected; triggering execution of the operation of determining the response module that responds to the usage control requirement and determining the response matter triggered by the user in the response module when it is detected that the current operating conditions of the system satisfy the usage control requirement;
determining a plurality of loading operation items of the system, and comparing the current operating conditions with the plurality of loading operation items to obtain unloaded items of the system, when it is detected that the current operating conditions of the system do not satisfy the usage control requirement;
generating a loading control instruction for the unloaded items, and performing loading control on the unloaded items according to the loading control instruction, so that the system is adjusted to satisfy the usage control requirement;
wherein the plurality of loading operation items comprise at least one item component of a core debugging tool component, a performance monitoring plugin, a network debugging plugin, a user interaction and gesture plugin, other general debugging tools, or a third-party plugin.

3. The method for debugging and performance monitoring in iOS application development according to claim 2, wherein the core debugging tool component comprises a view inspector, a measurement tool, and a color picker; the performance monitoring plugin comprises a frame rate monitor, a CPU and memory usage monitor; the network debugging plugin comprises a network log recorder, an API inspector; the user interaction and gesture plugin comprises a touch inspector, a gesture recognition debugger; the other general debugging tools comprise a console log recorder and a sandbox browser.

4. The method for debugging and performance monitoring in iOS application development according to claim 1, wherein all the debugging sub-modules comprise an interface control sub-module, a memory detection sub-module, a log management sub-module, and a network management sub-module;
the determining the response matter triggered by the user in the response module comprises:
determining at least one target debugging sub-module that responds to the usage control requirement from all the debugging sub-modules;
detecting a secondary control instruction triggered for the target debugging sub-module and corresponding instruction details thereof, and adding the secondary control instruction and corresponding instruction details thereof to the response matter triggered by the user in the response module;
the secondary control instruction comprises at least one instruction of a view editing instruction for the interface control sub-module, a memory detection processing instruction for the memory detection sub-module, a debugging and troubleshooting instruction for the log management sub-module, and a network debugging and optimization instruction for the network management sub-module.

5. The method for debugging and performance monitoring in iOS application development according to claim 4, wherein the instruction details corresponding to the secondary control instruction comprise at least one of interface hierarchy viewing, interface layout adjustment, and interface attribute editing when the secondary control instruction comprises the view editing instruction;
the instruction details corresponding to the secondary control instruction comprise at least one of application memory usage data monitoring, memory leak detection, and memory leak localization and processing when the secondary control instruction comprises the memory detection processing instruction;
the instruction details corresponding to the secondary control instruction comprise at least one of log display, layout and constraint debugging, measurement parameter debugging based on a measurement tool, color parameter debugging based on a color picker, frame rate debugging based on a frame rate monitor, memory leak detection based on a CPU and memory usage monitor, network debugging based on a network log recorder, API debugging based on an API inspector, touch debugging based on a touch inspector, gesture debugging based on a gesture recognition debugger, log debugging based on a console log recorder, sandbox debugging based on a sandbox browser, and plugin debugging based on a custom plugin when the secondary control instruction comprises the debugging and troubleshooting instruction;
the instruction details corresponding to the secondary control instruction comprise at least one of network request sending, network request recording, and network performance debugging when the secondary control instruction comprises the network debugging and optimization instruction.

6. The method for debugging and performance monitoring in iOS application development according to claim 4, wherein the determining the response matter triggered by the user in the response module further comprises:
acquiring application performance data collected for a currently running application in the system, the application performance data comprising at least one of CPU usage rate, memory occupancy, frame rate, and network bandwidth;
determining a plurality of optimization parameters of the performance monitoring module, and analyzing the application performance data to obtain a target optimization parameter currently to be optimized in the application performance data, the plurality of optimization parameters comprising at least one optimization parameter of interface rendering performance, memory usage, network request and data loading, animation performance, plugin startup time, thread processing and parallel tasks, application crash and error;
adding the target optimization parameter and a corresponding preset optimization matter thereof to the response matter triggered by the user in the response module.

7. The method for debugging and performance monitoring in iOS application development according to claim 6, wherein the response module further comprises a plugin extension module and/or a user interface module;
the determining the response matter triggered by the user in the response module further comprises:
determining a plugin to be installed for the system and a corresponding plugin installation matter thereof according to the usage control requirement, and adding the plugin to be installed and the corresponding plugin installation matter thereof to the response matter triggered by the user in the response module when the response module comprises the plugin extension module;
determining a switching requirement for any debugging and monitoring tool in the system according to the usage control requirement, generating a switching response instruction matching the switching requirement, and adding the debugging and monitoring tool and the corresponding switching response instruction thereof to the response matter triggered by the user in the response module when the response module comprises the user interface module;
the debugging and monitoring tool is a functional implementation tool provided in the multifunctional debugging module and the performance monitoring module.

8. A system for debugging and performance monitoring in iOS application development, comprising:
a memory, memorized with an executable code; and
a processor, coupled with the memory,
wherein the processor invokes the executable code memorized in the memory to perform the method for debugging and performance monitoring in iOS application development according to any one of claims 1-7.

9. A network attached storage device, the network attached storage device comprising a device body, the network attached storage device being configured to execute the method for debugging and performance monitoring in iOS application development according to any one of claims 1-7.
